# EUROPEAN PATENT APPLICATION

(11) **EP 4 574 469 A1**
(43) Date of publication of application: **25.06.2025**
(21) Application number: 23220048.5
(22) Date of filing: 22.12.2023
(51) Int. Cl.: B60C 23/04, B60C 29/02, B60C 19/00

(54) **ANTI-THEFT DEVICE FOR A WHEEL OF A VEHICLE**

(71) Applicant: Volvo Truck Corporation, 405 08 Göteborg (SE)
(72) Inventor: SRI GOKULNATH, V, 642126 Udumalpet (IN); HORANE, Tanuja, 411060 Pune (IN); Y, Prakash, 560046 Bangalore (IN)
(74) Representative: Lavoix

(57) **Abstract**

Anti-theft device for a wheel of a vehicle, comprising a tire inflation fitting (20), comprising a base (21), comprising a rim end (23) and a base connection end (24); and an extension (22), including a check valve (28), an extension connection end (26) and an outer end (27), wherein the extension (22) is detachably coupled to the base (21), wherein the check valve (28) has an open configuration and a closed configuration; wherein the anti-theft device (6) further comprises a tire pressure monitoring system, comprising an air pressure sensor attached to the extension (22), for measuring an inner air pressure (P26) at the extension connection end (26).

## Description

### TECHNICAL FIELD

The disclosure relates generally to vehicle wheels. In particular aspects, the disclosure relates to an anti-theft device for a wheel of a vehicle. The disclosure can in particular be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles are often subject to wheel thefts. A known vehicle is equipped with tire pressure monitoring system, including that each wheel is equipped with a wheel module for sensing the tire pressure en send the data wirelessly to a central unit embedded in the vehicle. As the wheel module is attached to the wheel, a wheel theft can be detected when the wheel module becomes out of range of the central unit. However, the detection is usually not efficient, since the wheel module has to be out of range so that the theft is detected. Hence the detection occurs only when the wheel is already detached from the wheel hub. The thief may also carefully leave the wheel module close to the vehicle while taking the wheel away, so that the theft is not detected at all.

### SUMMARY

A first aspect of the disclosure concerns an anti-theft device for a wheel of a vehicle, the anti-theft device comprising a tire inflation fitting, comprising:
- a base, comprising a rim end, for connecting the tire inflation fitting to a wheel rim of the wheel, and a base connection end;
- an extension, including a check valve, an extension connection end and an outer end, wherein the extension is detachably coupled to the base, so that, when coupled to the base, the base connection end is connected to the extension connection end, wherein the check valve has:
   - an open configuration, where the check valve is open for enabling an inflating airflow to flow from the outer end to the rim end via the check valve and the connection ends when the outer end is coupled to the base, the check valve being in open configuration when an outer air pressure at the outer end is higher than an inner air pressure at the extension connection end; and
   - a closed configuration, where the check valve is closed for preventing a deflating airflow to establish from the rim end to the base connection end when the extension is coupled to the base, the check valve being in closed configuration when the inner air pressure is higher than the outer air pressure;
wherein the anti-theft device further comprises a tire pressure monitoring system, comprising an air pressure sensor attached to the extension, for measuring the inner air pressure.

The first aspect of the disclosure may seek to enable a quick detection of the theft, alerting the user of the vehicle when a theft occurs and discouraging the theft. A technical benefit may include that, in case a thief wants to remove the wheel and remove the tire pressure monitoring system from the wheel, the thief may decide to remove the extension from the base. In this case, the base connection end is left open, so that the deflating airflow may establish from the rim end to the base connection end. A tire of the wheel will quickly deflate, which may discourage the theft. In turn, the tire monitoring system may detect a sudden change in the pressure measured by the air pressure sensor, as the measured pressure abruptly changes from a tire pressure to atmospheric pressure. The tire monitoring may thus alert the user, for example by activating of a horn of the vehicle. During normal use of the wheel, the tire inflation fitting may used in a traditional manner by the user, i.e. the user may inflate and/or deflate the tire without dismounting the extension, by connecting an inflating hose to the outer end. Said inflating hose may include a device, such as a spindle, for putting the check valve in the open configuration when the inflating hose is connected to the tire inflation fitting. Optionally, a dust cap may be detachably coupled to the extension, at the outer end thereof, which is removed by the user only when the inflating hose is to be connected to the tire inflation fitting.

Optionally in some examples, including in at least one preferred example, the check valve is a reed valve. A technical benefit may include efficiently ensuring the open and closed configuration.

Optionally in some examples, including in at least one preferred example, the base comprises a whistle, configured for emitting an alarm sound under action of the deflating airflow, when the deflating airflow flows from the rim end to the base connection end. A technical benefit may include that, in case the thief removes the extension, a strong alarm sound, in the form of a whistling sound, is produced at the base, in addition to any other alert already provided by the tire pressure monitoring system. The alarm sound may alert the user and discourage the thief. The alarm sound being emitted from a part of the wheel, it may follow the wheel in case the wheel is taken away by the thief. The alarm sound may keep on being emitted as long as the wheel remains sufficiently inflated.

Optionally in some examples, including in at least one preferred example, the base includes a conduit connecting the rim end to the base connection end, wherein the conduit has a converging shape, convergent from the rim end to the base connection end, for forming the whistle. The converging shape of the conduit may be a frustoconical shape. A technical benefit may include that the whistle is of very simple structure. The converging shape of the whistle may enable that the flow speed of the deflating airflow at the base connection end is higher than at the rim end, so that the alarm sound is produced by the high speed deflating airflow hitting stationary air outside from the base, at the base connection end. A technical benefit may be that the alarm sound is not emitted, or is much weaker when the deflation flow is established with the extension coupled to the base, e.g., during deflating of the wheel by the user by means of an inflation hose.

Optionally in some examples, including in at least one preferred example, the tire pressure monitoring system further comprises: a communication module, configured to be attached to a hub mounting flange of the vehicle to which the wheel is secured; and a cord, connecting the air pressure sensor to the communication module. A technical benefit may include that the extension must be removed for removing the wheel and taking the wheel away from the hub mounting flange, since the communication module remains secured to the hub mounting flange while the air pressure sensor is attached to the extension and to the communication module by the cord. Therefore, the thief is inclined to remove the extension from the base, which enables alerting the user as discussed above.

Optionally in some examples, including in at least one preferred example, the tire pressure monitoring system further comprises a bracket, for securing the communication module to a wheel stud of the vehicle, when said wheel stud secures the wheel to a hub mounting flange of the vehicle. A technical benefit may include that, the communication module is strongly attached to the vehicle and may not be detached without untightening the wheel stud, which holds the wheel to the hub mounting flange. Preferably, the bracket forms a loop around the wheel stud and, preferably, the hub mounting flange is interposed between the bracket and the wheel rim, so that the wheel stud needs to be removed from the hub mounting flange for the bracket to be removed from the wheel stud.

Optionally in some examples, including in at least one preferred example, the tire pressure monitoring system further comprises a tightening sensor, configured to be coupled to the wheel stud for measuring a tightening force of the wheel stud, wherein the tightening sensor is electrically connected to the communication module. A technical benefit may include that, in case a thief untightens the wheel stud for taking the wheel away and/or for detaching the communication module, untightening of the stud may be detected by the tire monitoring system, which may control activation of a horn of the vehicle for alerting the user and discouraging the thief.

Optionally in some examples, including in at least one preferred example, the tightening sensor is a ring-shaped compression load cell, configured to receive the wheel stud therethrough for being coupled to the wheel stud. A technical benefit may include that the tightening sensor itself is very compact and/or cannot be separated from the wheel stud without removing the wheel stud from the hub mounting flange, in case the hub mounting flange is interposed between the tightening sensor and the wheel rim.

Optionally in some examples, including in at least one preferred example, wherein the tightening sensor comprises: a first ring; a second ring, the first ring and the second ring being axially movable relative to each other; a spring, interposed axially between the first ring and the second ring and exerting an elastic force tending to move the first ring and the second ring away from each other; resistance strips, arranged between the first ring and the second ring with a radial distribution; and a mobile contact, which is movable radially in dependence to the position of the first ring and the second ring relative to each other, so that the mobile contact contacts one of the resistance strips in dependence of the position of the first ring and the second ring relative to each other. A technical benefit may include that the tightening sensor enables a precise and reliable measurement of the tightening while having a robust structure.

A second aspect of the disclosure concerns a vehicle, comprising: the anti-theft device as defined above; a wheel hub, comprising a hub mounting flange; and a wheel, including a wheel rim, wherein the wheel is secured to the hub mounting flange via the wheel rim, and wherein the tire inflation fitting of the anti-theft device is connected to the wheel rim by the rim end.. The second aspect of the disclosure may seek to enable a quick detection of the theft, alerting the user of the vehicle when a theft occurs and discouraging the theft.

A technical benefit may include that, in case a thief wants to remove the wheel and remove the tire pressure monitoring system from the wheel, the thief may decide to remove the extension from the base. In this case, the base connection end is left open, so that the deflating airflow may establish from the rim end to the base connection end. A tire of the wheel will quickly deflate, which may discourage the theft. In turn, the tire monitoring system may detect a sudden change in the pressure measured by the air pressure sensor, as the measured pressure abruptly changes from a tire pressure to atmospheric pressure. The tire monitoring may thus alert the user, for example by activating of a horn of the vehicle. During normal use of the wheel, the tire inflation fitting may used in a traditional manner by the user, i.e. the user may inflate and/or deflate the tire without dismounting the extension, by connecting an inflating hose to the outer end. Said inflating hose may include a device, such as a spindle, for putting the check valve in the open configuration when the inflating hose is connected to the tire inflation fitting. Optionally, a dust cap may be detachably coupled to the extension, at the outer end thereof, which is removed by the user only when the inflating hose is to be connected to the tire inflation fitting.

Optionally in some examples, including in at least one preferred example, the communication module is attached to the hub mounting flange and the cord connects the air pressure sensor to the communication module through the wheel rim. A technical benefit may include that, because of the cord, the extension needs to be removed from the base to remove the wheel from the hub mounting flange. A thief may decide to cut the cord instead of removing the extension, which may be detected by the tire pressure monitoring system. In that case, for example, the horn of the vehicle may be activated for discouraging the thief and for alerting the user.

Optionally in some examples, including in at least one preferred example, the hub mounting flange is arranged between the communication module and the wheel rim. A technical benefit may include that the communication module is positioned between the wheel hub and a wheel arch of the vehicle, behind the hub mounting flange and is therefore difficult to reach for a person, in particular for a thief willing to remove the communication module, even with the wheel removed from the hub mounting flange. This may lead the thief to remove the extension from the wheel instead, for taking the wheel away.

Optionally in some examples, including in at least one preferred example, the vehicle comprises a wheel stud, securing the wheel to the hub mounting flange via the wheel rim, wherein the communication module is secured to the hub mounting flange via the wheel stud by means of the bracket. A technical benefit may include that both the communication module may be difficult to remove from the vehicle.

Optionally in some examples, including in at least one preferred example, the hub mounting flange is arranged between the bracket and the wheel rim, and the hub mounting flange is arranged between the tightening sensor and the wheel rim. A technical benefit may include that the communication module and the tightening sensor may be difficult to reach for a person, including for a thief, and therefore may be difficult to remove from the vehicle. Preferably, the tightening sensor and the bracket are in abutment with each other.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 is a side view of a vehicle according to an embodiment, said vehicle including wheels.
FIG. 2 is a perspective partial view showing and an anti-theft device, wheel studs in a tightened configuration, nuts mounted on the wheel studs and a hub mounting flange of the vehicle of FIG. 1, to which one of the wheels shown in FIG. 1 is secured (wheel not shown in FIG. 2).
FIG. 3 is a perspective partial view showing the same elements than in FIG.2 under a different angle, where wheel studs are untightened.
FIG. 4 is a perspective partial view showing the wheel of the vehicle, the nuts and the hub mounting flange of FIGS. 1-3.
FIG. 5 is a cross-sectional view of a tire inflation fitting of the anti-theft device of FIGS 2-4.
FIG. 6 is a perspective view of a tightening sensor of the anti-theft device of FIGS 2-4.
FIG 7 is a perspective view of the tightening sensor of FIG. 6, where a ring of the tightening sensor is removed.

### DETAILED DESCRIPTION

The detailed description set forth below provides information and examples of the disclosed technology with sufficient detail to enable those skilled in the art to practice the disclosure.

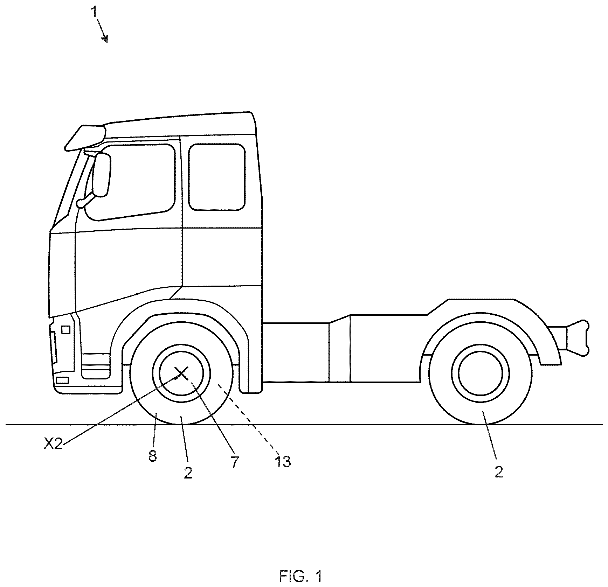

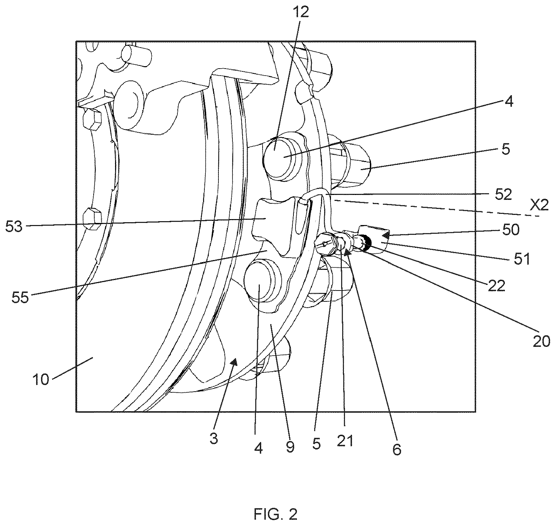

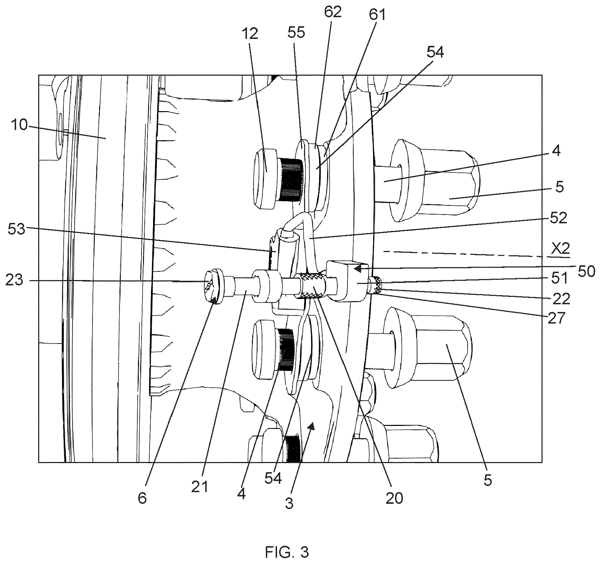

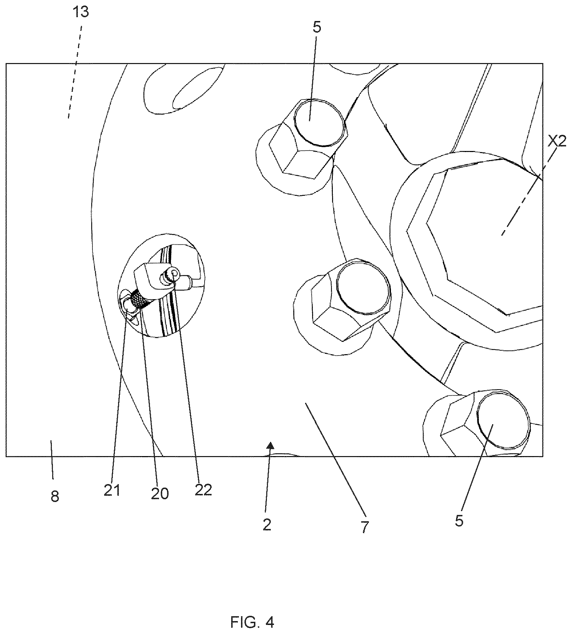

An embodiment shown in figures 1 to 7 includes a vehicle 1 comprising wheels 2, shown in figure 1. For at least one of said wheels 2, the vehicle 1 comprises a wheel hub 3, an anti-theft device 6, and preferably wheel studs 4 and nuts 5, as shown in figure 2. The wheel 2 preferably includes a wheel rim 7 and a tire 8, as shown in figures 1 and 4. The wheel hub 3 preferably includes a hub mounting flange 9 and a brake rotor 10, as shown in figures 2 and 3. The anti-theft device 6 comprises a tire inflation fitting 20 and preferably a tire monitoring system 50. The tire inflation fitting 20 comprises a base 21 and an extension 22, as shown in figures 2-5. The tire monitoring system 50 includes an air pressure sensor 51, and preferably a cord 52, a communication module 53, tightening sensors 54 and a bracket 55, as shown in Figures 2, 3 and 4.

The exemplary vehicle 1 is a truck. However, the present disclosure may apply to any other type of vehicle equipped with wheels. Each wheel 2 is configured to rotate around an axis X2 for rolling on the ground as the vehicle 1 is driven forward and backward. The tire 8 is mounted peripherally to the wheel rim 7.

The brake rotor 10 and the hub mounting flange 9 of the wheel hub 3 are preferably fixed relative to one another, and rotate around axis X2 relative to a chassis of the vehicle 1 when the vehicle 1 is driven forward and backward. For example, the brake rotor 10 is a brake disc or a brake drum.

The wheel 2 is secured to the hub mounting flange 9 via the wheel rim 7, so that the wheel 2 and the wheel hub 3 are fixed relative to one another, and rotate together around axis X2 when the vehicle 1 is driven forward and backward. Preferably, the hub mounting flange 9 is arranged between the brake rotor 10 and the wheel rim 7 along the axis X2. In other words, the wheel rim 7 is arranged at the outside of the vehicle 1 relative to the flange 9, and the flange 9 is arranged at the inside of the vehicle relative to the rim 7, along axis X2. Similarly, the flange 9 preferably is arranged at the outside of the vehicle 1 relative to the brake rotor 10, along axis X2.

Preferably, the wheel 2 is secured to the flange 9 by means of the studs 4 and the nuts 5. The studs 4 are preferably distributed around the axis X2. Each stud 4 preferably has a body parallel to the axis X2, and crossing successively through the flange 9 and the wheel rim 7. Each stud 4 preferably has a head 12, arranged at the flange 9 side, and fixedly connected to an inside end of the body of the stud 4. Each nut 5 is arranged at the rim 7 side, and screwed on one of the studs 4, in particular on an outside end of the body of the stud 4. The flange 9 and the rim 7 are interposed between the head 12 and the nut 5, so as to be tightened between said head an nut 5 along axis X2, when the stud 4 is tightened, i.e. when the nut 5 is screwed tightly on the stud 4.

The base 21 of the tire inflation fitting 20 comprises a rim end 23, oriented inwards, and a base connection end 24, oriented outwards.

The rim end 23 forms an opening. The rim end 23 connects the base 21. In particular, the rim end 23 crosses through the rim 7 for connecting the connecting the tire inflation fitting 20 to the wheel rim 7, so that the base 21 is in fluid connection with an annular chamber 13 of the wheel 2 via the rim end 23, said annular chamber 13 delimited radially between the rim 7 and the tire 8. The annular chamber 13 holds inflation air under pressure, when the wheel is in an inflated configuration.

The base connection end 24 forms an opening. As visible in figure 4, the base connection end 24 is arranged outside of the annular chamber 13 of the wheel 2, in particular outside the rim 7. The extension 22 is configured to be detachably coupled to the base 21, at the end 24. When uncoupled, the end 24 leads to an outside of the wheel 2.

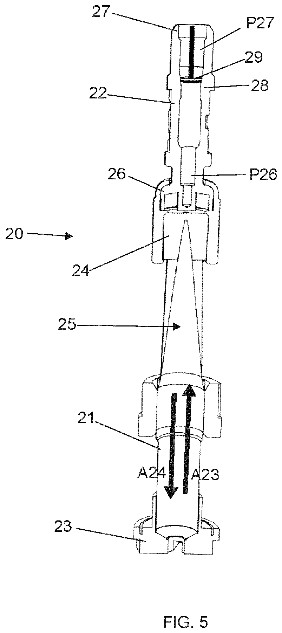

As visible in figure 5, the base 21 comprises a conduit 25, connecting the rim end 23 to the base connection end 24.

Preferably, the conduit 25 has a converging shape, i.e. is tapered, as shown in figure 5. The conduit 25 converges from the rim end 23 towards the base connection end 24, i.e. has a smaller cross section at the rim end 23 than at the connection end 24. Preferably, the converging shape is a frustoconical shape, i.e. the conduit 25 is frustoconical.

The extension 22 includes an extension connection end 26, an outer end 27 and a check valve 28.

The extension connection end 26 forms an opening. When the extension 22 is coupled to the base 21, the base connection end 26 is connected to the extension connection end 24, so that the base 21 is in fluid connection with the extension 22 via the ends 24 and 26. When the extension 22 is coupled to the base 21, the end 26 is directed towards the inside whereas the outer end 27 is directed towards the outside.

The outer end 27 forms an opening and is opposite to the end 26. Preferably, the outer end 27 is configured to be connected to an inflating hose, for inflating and deflating the annular chamber 13. Preferably, the fitting 20 may also include a dust cap, not shown, which may be detachably coupled to the end 27, and which is uncoupled by the user for coupling the inflating hose instead.

The check valve 28 forms a conduit, connecting the end 26 to the end 27. Preferably, the check valve 28 is a reed valve. For example, the check valve 28 includes a movable part 29 which moves relative to the conduit for opening and closing the valve 28. Depending on the movable part 29 being in the opening or closing position, the valve 28 is in an open configuration, where the conduit is open, or a closed configuration, where the conduit is shut. The check valve 28 may be put in the open configuration mechanically by an external device. In particular, the external device may push and maintain the movable part 29 inwards, i.e. towards the end 26. The external device may be an inflating hose connected to the end 27. When the movable part is not maintained mechanically by an external device, the check valve 28 is put in the open configuration when an outer air pressure P27, for air contained in the extension 22 between the valve 28 and the outer end 27, is higher than an inner air pressure P26, for air contained in the extension 22 between the valve 28 and the connection end 26. When the movable part is not maintained by the external device, the check valve 28 is put in the closed configuration when the inner air pressure P26 is higher than the outer air pressure P27.

A deflation airflow A23 may establish through the fitting 20, in particular through the base 21 and, if coupled and in the open configuration, through the extension 22. The deflation airflow A23 includes air originating from the annular chamber 13 of the wheel 2 and flowing from the end 23 to the end 24 via the conduit 25, for exiting the wheel 2. If the extension 22 is attached, the deflating airflow A23 flows from the end 26 to the end 27 through the open check valve 28. In this case, the tire 8 is being deflated.

If the extension 22 is coupled to the base 21, the deflating airflow A23 may establish only if the valve 28 is in the open configuration, and tends to put the valve 28 in the closed configuration. When the valve 28 is in the closed configuration, the valve 28 prevents the airflow A23 of establishing, by shutting the conduit of the extension 22. Thus the tire 8 cannot deflate in this situation.

An inflation airflow A24 may establish through the fitting 20, with air originating from the outside of the wheel 2 and flowing from the end 24 to the end 23 via the conduit 25 for filling the annular chamber 13. In that case, the tire 8 is being inflated. If the extension 22 is coupled and in the open configuration, the inflating airflow A24 flows from the end 27 to the end 26, through the conduit of the extension 22, through the open valve 28. The inflation airflow A24 tends to maintain the valve 28 in the open configuration. Thus, the tire 8 may be inflated when the extension 22 is coupled, through the extension 22.

Since the conduit 25 of the base 21 has a converging shape, said conduit 25 may form a whistle, that generates an alarm sound when the deflating airflow A23 flows from the rim end 23 to the connection end 24, preferably only when the extension 22 is uncoupled from the base 21. The alarm sound may be produced at the end 24, since a flow speed of the airflow A23 may be increased compared to a flow speed of the airflow A23 at the end 24, due to the smaller cross section of the end 24 compared to cross section of the end 23. Thus, the airflow A23 hits ambient air at high flow speed at the end 24 and may cause the alarm sound. When the extension 22 is coupled, the alarm sound may not be generated, or be weaker, since the airflow A23 is not released outside the fitting 20 at the end 24, but at the end 27.

As shown in figures 2-4, the air pressure sensor 51 of the tire pressure monitoring system 50 is non-removably attached to the extension 22. Therefore, the air pressure sensor 51 may be removed from the fitting 20 only by uncoupling the extension 22. The air pressure sensor measures the inner air pressure P26. When the extension 22 is coupled, the air pressure P26 reflects the pressure of air inside the annular chamber 13, i.e. reflects how much the tire 8 is inflated.

As shown in figures 2 and 3, the bracket 55 is preferably formed as a plate, in abutment to a back face of the hub mounting flange 9, facing the brake rotor 10. In other words, the bracket 55 is arranged between the flange 9 and the rotor 10, along the axis X2. The bracket 55 is secured to the flange 9 by means of at least one of the studs 4, here with two studs 4. To that end the bracket 55 preferably comprises a respective hole for each stud 4, each hole forming a closed loop around the body of the stud 4. When the studs 4 are tight as shown in figure 2, the bracket 55 is axially interposed between the head 12 of the studs 4 and the flange 9, preferably with interposition of the sensors 54 between the bracket 55 and the flange 9. Hence, for dismounting the bracket 55 from the hub 3, the studs 4 securing the bracket 55 need to be removed entirely from the flange 9. In this situation, the flange 9 is preferably arranged between the bracket 55 and the wheel rim 7.

The communication module 53 is non-detachably secured to the bracket 55, so as to be secured to the flange 9 via the bracket 55. In this situation, the flange 9 is preferably arranged between the communication module 53 and the wheel rim 7. For dismounting the communication module 53 from the hub 3, the studs 4 securing the bracket 55 need to be removed entirely from the flange 9.

Each tightening sensor 54 is configured to be coupled to a respective the wheel stud 4 for measuring a tightening force of said wheel stud 4. In other words, the sensor 54 measures a compression force applied to the sensor 54 by the head 12 of the stud 4 and by the flange 9, via the bracket 55 if the bracket 55 is secured by the same stud 4. This measurement enables checking if the stud 4 is tightened as shown in figure 2, which is the case when the wheel 2 is correctly secured to the flange 9, or if the stud 4 is untightened, as shown in figure 3, or was removed from the flange 9.

As shown in figures 3, 6 and 7, the tightening sensor 54 is preferably a ring-shaped compression load cell, configured to receive one of the wheel studs 4 therethrough for being coupled to said wheel stud 4. The tightening sensor 54 may be mounted on the same wheel stud 4 that secures the communication module 53. Only one tightening sensor 54 may be provided, or several, each mounted on one of the studs 4, preferably the studs 4 securing the communication module 53. Here, two sensors 54 are provided, respectively mounted on the two studs 4 securing the bracket 55. Preferably, each sensor 54 is axially arranged between the flange 9 and the head 12 of the stud 4, in particular between the bracket 55 and the flange 9. In particular, the hub mounting flange 9 is arranged between the tightening sensor 54 and the wheel rim 7, along the axis X2. In particular, the sensor 54 is arranged between the brake rotor 10 and the flange 9, along the axis X2.

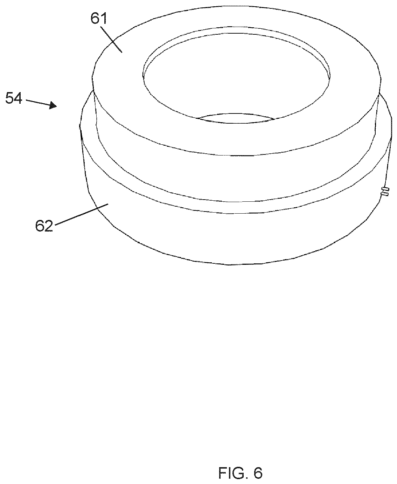

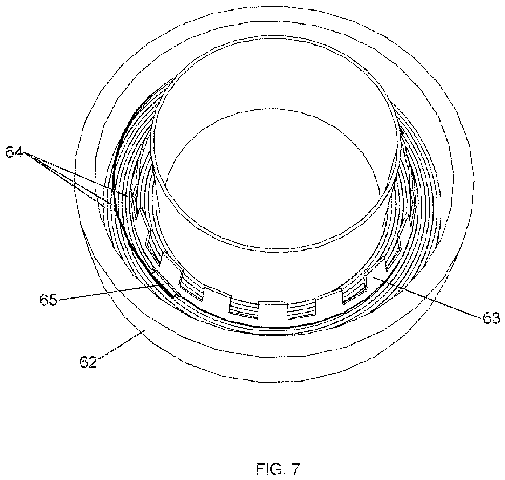

As shown in figures 6 and 7, the tightening sensor preferably comprises a ring 61, a ring 62, a spring 63, concentric resistance strips 64 and a mobile contact 65.

The rings 61 and 62 each surround the body of the stud 4, one ring being in abutment to the head 12 and the other being in abutment to the flange 9. The bracket 55 is preferably interposed in between. The rings 61 and 62 are axially movable relative to each other, i.e. the ring 61 may slide towards or away from the ring 62 parallel to the axis of the stud 4, i.e. parallel to axis X2. The rings 61 and 62 preferably form an enclosure for the sensor 54.

The spring 63 is a compression spring. Preferably, the spring 63 is configured to expand in the radial direction when compressed into the axial direction. To that end the spring 63 is for example a diaphragm spring as shown in figure 7, surrounding the body of the stud. The spring 63 is preferably arranged inside the enclosure formed by the rings 61 and 62. The spring 63 is interposed axially between the rings 61 and 62, so as to exert an elastic force tending to move the rings 61 and 62 away from each other parallel to the stud 4, i.e. parallel to axis X2. Thus, the rings 61 and 62 are maintained in abutment against the head 12 and the flange 9, as long as the stud 4 is sufficiently tightened.

Each resistance strip 64 is preferably secured to the ring 62. The resistance strips 64 are preferably arranged along a radial plane perpendicular to the stud 4. The resistance strips 64 are distributed radially relative to the stud 4, i.e. some of the strips are located peripherally, and other strips are located more centrally. Each resistance strip 64 is preferably circular and centered on the stud 4. In this case, the resistance strips 64 may be concentric. The resistance strips 64, which are electrically conductive, are separated from each other by a dielectric material or by air. Each strip 64 preferably has a different electric resistance value compared to the other strips 64.

The mobile contact 65 is movable radially relative to the rings 61 and 62, in dependence to the axial position of the rings 61 and 62 relative to each other. Therefore, the radial position of the contact 65 reflects the relative axial position of the rings 61 and 62. To that end, for example, the mobile contact 65 may be attached to the spring 63, or be formed by the spring 63, in case the spring 63 deforms radially when compressed between the rings 61 and 62, which is the case for a diaphragm spring, for example. In moving radially relative to the rings 61 and 62, the contact 65 is put in contact with one or another of the resistance strips 64. The contacted resistance strip 64 thus reflects the relative axial position of the rings 61 and 62 and/or the tension of the spring 63, in turn reflecting the tightening force applied onto the sensor 54 by the stud 4, counteracted by the spring 63. The sensor 54 may include a lead connected to the contact 65 and another lead connected to the resistance strips 64, for example opposite to the contact point with the contact 65. Measuring the resistance value between the leads enables to estimate a value of the tightening of the stud 4.

The communication module 53 is connected to the air pressure sensor 51 via the cord 52 and to the sensors 54, for example via the leads thereof.

An electric signal representing the pressure P26 and produced by the sensor 51 is transmitted electrically from the sensor 51 to the module 53 via the cord 52. The cord 52 connects the air pressure sensor 51 to the module 53 through the wheel rim 7. In other words, the cord 52 preferably passes through an opening of the wheel rim 7.

An electric signal, such as the aforementioned resistance value, representing the tightening of the stud 4 and produced by the sensor 54, is transmitted electrically from the sensor 54 to the communication module 53 via the leads.

The communication module 53 preferably includes a radio component, for example including a solid-state electronic processor and an antenna connected to the processor, and an embedded power source for powering the electronic processor. The radio component enables wireless communication of the communication module 53 with an on-board computer of the vehicle 1, in particular for enabling the communication module 53 to send the signals received from the sensors 51 and 54 to said on-board computer. Depending on the received signals, the on-board computer may activate a horn of the vehicle 1 or an alarm of the vehicle 1, or activate sending of a message or of an alarm to the user.

In use, a function of the tire pressure monitoring system 50 is to inform or alert the user concerning the tire pressure, so that the user may inflate or deflate the tire 8 when required. To that end, the communication module 53 may send information concerning the pressure P26 measured by the sensor 51 to the on-board computer of the vehicle 1.

The tire pressure monitoring system 50 is also used for detecting a theft of the wheel 2. In use, if a thief is willing to take the wheel 2 away, several situations are possible. The thief may decide to firstly remove the studs 4 to take the wheel 2 away. In this case, the tightening sensors 54 will reflect that the studs 4 are being untightened. The communication module 53 may send this information to the on-board computer of the vehicle 1 and appropriate measures can be taken, such as, activating the horn of the vehicle or activating sending of an alert to the user. The thief may decide to firstly remove the extension 22 so that the air pressure sensor 51 is disconnected. In that case, the pressure sensor 51 will reflect that the pressure P26 suddenly dropped. The communication module 53 may send this information to the on-board computer of the vehicle 1 and appropriate measures can be taken, such as, activating the horn of the vehicle or activating sending of an alert to the user. In addition or alternatively, the removed extension 22 enables that the deflating flow A23 is established, producing the alarm sound acoustically by flowing through the whistling conduit 25, thus also alerting the user and discouraging the thief. The thief can also not remove the communication module 53 from the hub 3, since the module 53 is strongly secured by the studs 4, at a location difficult to access without removing the wheel 2, i.e. behind the flange 9.

Example 1: An anti-theft device 6) for a wheel 2) of a vehicle 1), the anti-theft device 6) comprising a tire inflation fitting 20), comprising:
- a base 21, comprising a rim end 23, for connecting the tire inflation fitting 20 to a wheel rim 7 of the wheel 2, and a base connection end 24;
- an extension 22, including a check valve 28, an extension connection end 26 and an outer end 27, wherein the extension 22 is detachably coupled to the base 21, so that, when coupled to the base 21, the base connection end 24 is connected to the extension connection end 26, wherein the check valve 28 has:
- an open configuration, where the check valve 28 is open for enabling an inflating airflow A24 to flow from the outer end 27 to the rim end 23 via the check valve 28 and the connection ends 24, 26 when the outer end 27 is coupled to the base 21, the check valve 28 being in open configuration when an outer air pressure P27 at the outer end 27 is higher than an inner air pressure P26 at the extension connection end 26; and
- a closed configuration, where the check valve 28 is closed for preventing a deflating airflow A23 to establish from the rim end 23 to the base connection end 24 when the extension 22 is coupled to the base 21, the check valve 28 being in closed configuration when the inner air pressure P26 is higher than the outer air pressure P27;
wherein the anti-theft device 6 further comprises a tire pressure monitoring system 50, comprising an air pressure sensor 51 attached to the extension 22, for measuring the inner air pressure P26.

Example 2: The anti-theft device 6 of example 1, wherein the check valve 28 is a reed valve.

Exemple 3: The anti-theft device 6 of any one of the preceding examples, wherein the base 21 comprises a whistle 25, configured for emitting an alarm sound under action of the deflating airflow A23, when the deflating airflow A23 flows from the rim end 23 to the base connection end 24.

Example 4: The anti-theft device 6 of any one of the preceding examples, wherein the base 21 includes a conduit 25 connecting the rim end 23 to the base connection end 24, wherein the conduit 25 has a converging shape, convergent from the rim end 23 to the base connection end 24, for forming the whistle 25.

Example 5: The anti-theft device 6 of example 4, wherein the converging shape of the conduit 25 is a frustoconical shape.

Example 6: The anti-theft device 6 of any one of the preceding examples, wherein the tire pressure monitoring system 50 further comprises:
- a communication module 53, configured to be attached to a hub mounting flange 9 of the vehicle 1 to which the wheel 2 is secured; and
- a cord 52, connecting the air pressure sensor 51 to the communication module 53.

Example 7: The anti-theft device 6 of example 6, wherein the tire pressure monitoring system 50 further comprises a bracket 55, for securing the communication module 53 to a wheel stud 4 of the vehicle 1, when said wheel stud 4 secures the wheel 2 to a hub mounting flange 9 of the vehicle 1.

Example 8: The anti-theft device 6 of example 7, wherein the tire pressure monitoring system 50 further comprises a tightening sensor 54, configured to be coupled to the wheel stud 4 for measuring a tightening force of the wheel stud 4, wherein the tightening sensor 54 is electrically connected to the communication module 53.

Example 9: The anti-theft device 6 of example 8, wherein the tightening sensor 54 is a ring-shaped compression load cell, configured to receive the wheel stud 4 therethrough for being coupled to the wheel stud 4.

Example 10: The anti-theft device 6 of any one of examples 7 to 9, wherein the tightening sensor 54 comprises:
- a first ring 61;
- a second ring 62, the first ring 61 and the second ring 62 being axially movable relative to each other;
- a spring 63, interposed axially between the first ring 61 and the second ring 62 and exerting an elastic force tending to move the first ring 61 and the second ring 62 away from each other;
- resistance strips 64, arranged between the first ring 61 and the second ring 62 with a radial distribution; and
- a mobile contact 65, which is movable radially in dependence to the position of the first ring 61 and the second ring 62 relative to each other, so that the mobile contact 65 contacts one of the resistance strips 64 in dependence of the position of the first ring 61 and the second ring 62 relative to each other.

Example 11: A vehicle 1, comprising:
- the anti-theft device 6 according to any one of the preceding examples;
- a wheel hub 3, comprising a hub mounting flange 9; and
- a wheel 2, including a wheel rim 7, wherein the wheel 2 is secured to the hub mounting flange 9 via the wheel rim 7, and wherein the tire inflation fitting 20 of the anti-theft device 6 is connected to the wheel rim 7 by the rim end 23.

Example 12: The vehicle 1 of example 11, wherein:
- the anti-theft device 6 is according to any one of examples 6 to 10;
- the communication module 53 is attached to the hub mounting flange 9; and
- the cord 52 connects the air pressure sensor 51 to the communication module 53 through the wheel rim 7.

Example 13: The vehicle 1 of example 12, wherein the hub mounting flange 9 is arranged between the communication module 53 and the wheel rim 7.

Example 14: The vehicle 1 of any one of examples 11 to 13, wherein:
- the anti-theft device 6 is according to any one of examples 7 to 10; and
- the vehicle 1 comprises a wheel stud 4, securing the wheel 2 to the hub mounting flange 9 via the wheel rim 7, wherein the communication module 53 is secured to the hub mounting flange 9 via the wheel stud 4 by means of the bracket 55.

Example 15: The vehicle 1 of example 14, wherein:
- the anti-theft device 6 is according any one of examples 8 to 10;
- the hub mounting flange 9 is arranged between the bracket 55 and the wheel rim 7; and
- the hub mounting flange 9 is arranged between the tightening sensor 54 and the wheel rim 7.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An anti-theft device (6) for a wheel (2) of a vehicle (1), the anti-theft device (6) comprising a tire inflation fitting (20), comprising:
- a base (21), comprising a rim end (23), for connecting the tire inflation fitting (20) to a wheel rim (7) of the wheel (2), and a base connection end (24);
- an extension (22), including a check valve (28), an extension connection end (26) and an outer end (27), wherein the extension (22) is detachably coupled to the base (21), so that, when coupled to the base (21), the base connection end (24) is connected to the extension connection end (26), wherein the check valve (28) has:
- an open configuration, where the check valve (28) is open for enabling an inflating airflow (A24) to flow from the outer end (27) to the rim end (23) via the check valve (28) and the connection ends (24, 26) when the outer end (27) is coupled to the base (21), the check valve (28) being in open configuration when an outer air pressure (P27) at the outer end (27) is higher than an inner air pressure (P26) at the extension connection end (26); and
- a closed configuration, where the check valve (28) is closed for preventing a deflating airflow (A23) to establish from the rim end (23) to the base connection end (24) when the extension (22) is coupled to the base (21), the check valve (28) being in closed configuration when the inner air pressure (P26) is higher than the outer air pressure (P27);
wherein the anti-theft device (6) further comprises a tire pressure monitoring system (50), comprising an air pressure sensor (51) attached to the extension (22), for measuring the inner air pressure (P26).

2. The anti-theft device (6) of claim 1, wherein the check valve (28) is a reed valve.

3. The anti-theft device (6) of any one of the preceding claims, wherein the base (21) comprises a whistle (25), configured for emitting an alarm sound under action of the deflating airflow (A23), when the deflating airflow (A23) flows from the rim end (23) to the base connection end (24).

4. The anti-theft device (6) of any one of the preceding claims, wherein the base (21) includes a conduit (25) connecting the rim end (23) to the base connection end (24), wherein the conduit (25) has a converging shape, convergent from the rim end (23) to the base connection end (24), for forming the whistle (25).

5. The anti-theft device (6) of claim 4, wherein the converging shape of the conduit (25) is a frustoconical shape.

6. The anti-theft device (6) of any one of the preceding claims, wherein the tire pressure monitoring system (50) further comprises:
- a communication module (53), configured to be attached to a hub mounting flange (9) of the vehicle (1) to which the wheel (2) is secured; and
- a cord (52), connecting the air pressure sensor (51) to the communication module (53).

7. The anti-theft device (6) of claim 6, wherein the tire pressure monitoring system (50) further comprises a bracket (55), for securing the communication module (53) to a wheel stud (4) of the vehicle (1), when said wheel stud (4) secures the wheel (2) to a hub mounting flange (9) of the vehicle (1).

8. The anti-theft device (6) of claim 7, wherein the tire pressure monitoring system (50) further comprises a tightening sensor (54), configured to be coupled to the wheel stud (4) for measuring a tightening force of the wheel stud (4), wherein the tightening sensor (54) is electrically connected to the communication module (53).

9. The anti-theft device (6) of claim 8, wherein the tightening sensor (54) is a ring-shaped compression load cell, configured to receive the wheel stud (4) therethrough for being coupled to the wheel stud (4).

10. The anti-theft device (6) of any one of claims 7 to 9, wherein the tightening sensor (54) comprises:
- a first ring (61);
- a second ring (62), the first ring (61) and the second ring (62) being axially movable relative to each other;
- a spring (63), interposed axially between the first ring (61) and the second ring (62) and exerting an elastic force tending to move the first ring (61) and the second ring (62) away from each other;
- resistance strips (64), arranged between the first ring (61) and the second ring (62) with a radial distribution; and
- a mobile contact (65), which is movable radially in dependence to the position of the first ring (61) and the second ring (62) relative to each other, so that the mobile contact (65) contacts one of the resistance strips (64) in dependence of the position of the first ring (61) and the second ring (62) relative to each other.

11. A vehicle (1), comprising:
- the anti-theft device (6) according to any one of the preceding claims;
- a wheel hub (3), comprising a hub mounting flange (9); and
- a wheel (2), including a wheel rim (7), wherein the wheel (2) is secured to the hub mounting flange (9) via the wheel rim (7), and wherein the tire inflation fitting (20) of the anti-theft device (6) is connected to the wheel rim (7) by the rim end (23).

12. The vehicle (1) of claim 11, wherein:
- the anti-theft device (6) is according to any one of claims 6 to 10;
- the communication module (53) is attached to the hub mounting flange (9); and
- the cord (52) connects the air pressure sensor (51) to the communication module (53) through the wheel rim (7).

13. The vehicle (1) of claim 12, wherein the hub mounting flange (9) is arranged between the communication module (53) and the wheel rim (7).

14. The vehicle (1) of any one of claims 11 to 13, wherein:
- the anti-theft device (6) is according to any one of claims 7 to 10; and
- the vehicle (1) comprises a wheel stud (4), securing the wheel (2) to the hub mounting flange (9) via the wheel rim (7), wherein the communication module (53) is secured to the hub mounting flange (9) via the wheel stud (4) by means of the bracket (55).

15. The vehicle (1) of claim 14, wherein:
- the anti-theft device (6) is according any one of claims 8 to 10;
- the hub mounting flange (9) is arranged between the bracket (55) and the wheel rim (7); and
- the hub mounting flange (9) is arranged between the tightening sensor (54) and the wheel rim (7).

## Amended claims

### Amended claims in accordance with Rule 137(2) EPC.

1. An anti-theft device (6) for a wheel (2) of a vehicle (1), the anti-theft device (6) comprising a tire inflation fitting (20), **characterized in that** the tire inflation fitting (20) comprises:
- a base (21), comprising a rim end (23), for connecting the tire inflation fitting (20) to a wheel rim (7) of the wheel (2), and a base connection end (24);
- an extension (22), including a check valve (28), an extension connection end (26) and an outer end (27), wherein the extension (22) is detachably coupled to the base (21), so that, when coupled to the base (21), the base connection end (24) is connected to the extension connection end (26), wherein the check valve (28) has:
- an open configuration, where the check valve (28) is open for enabling an inflating airflow (A24) to flow from the outer end (27) to the rim end (23) via the check valve (28) and the connection ends (24, 26) when the outer end (27) is coupled to the base (21), the check valve (28) being in open configuration when an outer air pressure (P27) at the outer end (27) is higher than an inner air pressure (P26) at the extension connection end (26); and
- a closed configuration, where the check valve (28) is closed for preventing a deflating airflow (A23) to establish from the rim end (23) to the base connection end (24) when the extension (22) is coupled to the base (21), the check valve (28) being in closed configuration when the inner air pressure (P26) is higher than the outer air pressure (P27);
wherein the anti-theft device (6) further comprises a tire pressure monitoring system (50), comprising an air pressure sensor (51) attached to the extension (22), for measuring the inner air pressure (P26).

2. The anti-theft device (6) of claim 1, wherein the check valve (28) is a reed valve.

3. The anti-theft device (6) of any one of the preceding claims, wherein the base (21) comprises a whistle (25), configured for emitting an alarm sound under action of the deflating airflow (A23), when the deflating airflow (A23) flows from the rim end (23) to the base connection end (24).

4. The anti-theft device (6) of any one of the preceding claims, wherein the base (21) includes a conduit (25) connecting the rim end (23) to the base connection end (24), wherein the conduit (25) has a converging shape, convergent from the rim end (23) to the base connection end (24), for forming the whistle (25).

5. The anti-theft device (6) of claim 4, wherein the converging shape of the conduit (25) is a frustoconical shape.

6. The anti-theft device (6) of any one of the preceding claims, wherein the tire pressure monitoring system (50) further comprises:
- a communication module (53), configured to be attached to a hub mounting flange (9) of the vehicle (1) to which the wheel (2) is secured; and
- a cord (52), connecting the air pressure sensor (51) to the communication module (53).

7. The anti-theft device (6) of claim 6, wherein the tire pressure monitoring system (50) further comprises a bracket (55), for securing the communication module (53) to a wheel stud (4) of the vehicle (1), when said wheel stud (4) secures the wheel (2) to a hub mounting flange (9) of the vehicle (1).

8. The anti-theft device (6) of claim 7, wherein the tire pressure monitoring system (50) further comprises a tightening sensor (54), configured to be coupled to the wheel stud (4) for measuring a tightening force of the wheel stud (4), wherein the tightening sensor (54) is electrically connected to the communication module (53).

9. The anti-theft device (6) of claim 8, wherein the tightening sensor (54) is a ring-shaped compression load cell, configured to receive the wheel stud (4) therethrough for being coupled to the wheel stud (4).

10. The anti-theft device (6) of any one of claims 7 to 9, wherein the tightening sensor (54) comprises:
- a first ring (61);
- a second ring (62), the first ring (61) and the second ring (62) being axially movable relative to each other;
- a spring (63), interposed axially between the first ring (61) and the second ring (62) and exerting an elastic force tending to move the first ring (61) and the second ring (62) away from each other;
- resistance strips (64), arranged between the first ring (61) and the second ring (62) with a radial distribution; and
- a mobile contact (65), which is movable radially in dependence to the position of the first ring (61) and the second ring (62) relative to each other, so that the mobile contact (65) contacts one of the resistance strips (64) in dependence of the position of the first ring (61) and the second ring (62) relative to each other.

11. A vehicle (1), comprising:
- the anti-theft device (6) according to any one of the preceding claims;
- a wheel hub (3), comprising a hub mounting flange (9); and
- a wheel (2), including a wheel rim (7), wherein the wheel (2) is secured to the hub mounting flange (9) via the wheel rim (7), and wherein the tire inflation fitting (20) of the anti-theft device (6) is connected to the wheel rim (7) by the rim end (23).

12. The vehicle (1) of claim 11, wherein:
- the anti-theft device (6) is according to any one of claims 6 to 10;
- the communication module (53) is attached to the hub mounting flange (9); and
- the cord (52) connects the air pressure sensor (51) to the communication module (53) through the wheel rim (7).

13. The vehicle (1) of claim 12, wherein the hub mounting flange (9) is arranged between the communication module (53) and the wheel rim (7).

14. The vehicle (1) of any one of claims 11 to 13, wherein:
- the anti-theft device (6) is according to any one of claims 7 to 10; and
- the vehicle (1) comprises a wheel stud (4), securing the wheel (2) to the hub mounting flange (9) via the wheel rim (7), wherein the communication module (53) is secured to the hub mounting flange (9) via the wheel stud (4) by means of the bracket (55).

15. The vehicle (1) of claim 14, wherein:
- the anti-theft device (6) is according any one of claims 8 to 10;
- the hub mounting flange (9) is arranged between the bracket (55) and the wheel rim (7); and
- the hub mounting flange (9) is arranged between the tightening sensor (54) and the wheel rim (7).
